# EUROPÄISCHE PATENTSCHRIFT

(11) **EP 3 068 681 B1**
(45) Veröffentlichungstag und Bekanntmachung des Hinweises auf die Patenterteilung: **23.05.2018**
(21) Anmeldenummer: 14783616.7
(22) Anmeldetag: 10.10.2014
(51) Int. Cl.: B62J 23/00, B62J 25/00, B62J 27/00

(54) **MULTIFUNKTIONALER TRITTBRETTTRÄGER EINES MOTORROLLERS**
MULTI FUNCTIONAL FOOTBOARD CARRIER FOR MOTORSCOOTER
SUPPORT DE REPOSE-PIEDS MULTIFONCTION POUR TROTTINETTE

(30) Priorität: 11.11.2013 DE 102013222810
(43) Veröffentlichungstag der Anmeldung: 21.09.2016
(73) Patentinhaber: Bayerische Motoren Werke Aktiengesellschaft, 80809 München (DE)
(72) Erfinder: WINKLER, Angelika, 85630 Grasbrunn (DE)
(86) Internationale Anmeldenummer: PCT/EP2014/071748
(87) Internationale Veröffentlichungsnummer: WO 2015/067431

(56) Entgegenhaltungen:
- EP-A2- 2 202 138
- CN-Y- 201 040 556
- JP-A- H01 101 281
- JP-A- H08 127 377
- JP-A- H09 216 589
- JP-A- H09 249 171
- JP-A- 2006 175 911
- JP-U- S 632 687
- JP-U- S58 132 727
- JP-U- S63 166 881

## Beschreibung

Die Erfindung betrifft einen multifunktionalen Trittbrettträger eines Motorrollers, der neben der bloßen befestigenden Trittbrettaufnahme weiterführende Funktionen zur Aufnahme von Komponenten wie Kühler, Kabel und dergleichen sowie zum Schutz von Fahrzeugbauteilen aufweist.

Aus dem Stand der Technik ist bekannt, als Trittbrettträger bei Motorrollern eine verschweißte Stahlrohrkonstruktion zu verwenden, die sich über die Fahrzeuglänge zumindest im Bereich der Trittbrettauflagen und teilweise auch weiter bis zu einem Frontträger oder Rahmenteilen im hinteren Bereich des Fahrzeugs erstreckt. Auf der Stahlrohrkonstruktion werden Kunststoffauflagen positioniert und befestigt. Derartige Stahl-Trittbrettträger erfüllen somit lediglich die Aufgabe, eine Auflage und befestigende Aufnahme der Trittbretter bereitzustellen, auf denen der Fahrer die Füße abstellen kann. Dabei ist das Gewicht der Stahlrohrkonstruktion vergleichsweise hoch. Weitere Trittbrettträger sind aus den Offenbarungen der JP S63 2687 U, JP 2006 175911 A, JP H01 101281 A und der JP S63 166881 bekannt, die jeweils die Merkmale des Oberbegriffs von Anspruch 1 offenbaren. Der Erfindung liegt deshalb die Aufgabe zugrunde, einen Trittbrettträger für einen Motorroller bereitzustellen, der zusätzlich zu der bisherigen Aufgabe weitere Funktionen erfüllt und gegenüber herkömmlichen Trittbrettträgern ein geringeres Gewicht aufweist.

Diese Aufgabe wird gelöst durch eine Merkmalskombination gemäß Patentanspruch 1.

Dabei wird erfindungsgemäß ein multifunktionaler Trittbrettträger für einen Motorroller vorgesehen, der über mindestens eine über die reine Trittbrettaufnahme und - befestigung weiterführende Funktion verfügt. Insbesondere ist eine vorteilhafte Kombination, den Trittbrettträger mit einer Schutzfunktion für innen liegende Bauteile des Motorrollers auszustatten, wobei die Schutzfunktion in einer günstigen Ausführung durch mindestens einen in Fahrtrichtung gesehen seitlich daran ausgebildeten Seiten-Aufprallschutz gewährleistet ist, der dazu ausgebildet ist, eine Seitenfläche des Motorrollers zumindest abschnittsweise zu überdecken. Im Crashfall, z. B. bei einem Sturz auf die Seite, erfolgt die Krafteinleitung auf den Seiten-Aufprallschutz, der hierdurch zumindest teilweise deformiert und/oder zerstört werden kann. Die dahinter, innen liegenden Bauteile sind jedoch geschützt und bleiben unversehrt.

In einer vorteilhaften Ausführungsform des Trittbrettträger ist vorgesehen, dass er aus Kunststoff (z.B. PA) gebildet und der Seiten-Aufprallschutz einstückig daran ausgebildet ist. Kunststoff ist gegenüber den bisher eingesetzten Stahlkonstruktionen viel leichter. Zudem können beispielsweise im Spritzgussverfahren weiterführende Funktionen wie der Seiten-Aufprallschutz mit integriert werden, ohne den gewichtsintensiven Einsatz von Stahl auszuweiten. Auch ist in einer Ausführung zur Erhöhung der Stabilität vorsehbar, faserverstärkten Kunststoff zu verwenden. Durch die einstückige Angliederung des Seiten-Aufprallschutzes ist ferner eine Reduzierung des Montageaufwands realisiert.

Erfindungsgemäß und bezüglich der Energieaufnahmefähigkeit und Steifigkeit vorteilhaft ist der Seiten-Aufprallschutzes durch eine Vielzahl von Waben gebildet. Günstig ist dabei eine Anordnung der Waben, bei der deren offene Seite jeweils in seitliche Richtung, d.h. senkrecht zur Fahrtrichtung, weist. Ferner ist in einer bevorzugten Ausführung der Erfindung vorgesehen, dass die Vielzahl der Waben unmittelbar aneinander angrenzt, so dass eine Gesamtstruktur vergleichbar zu einer Bienenwabe erzielt wird. Der Seiten-Aufprallschutz ersetzt bisher im Stand der Technik verwendete, am Rahmen verschraubte Sturzpads oder Sturzbügel. Hinter dem Seiten-Aufprallschutz können sicherheitsrelevante Bauteile wie beispielsweise Batteriegehäuse bei einem E-Roller verbaut sein. Die Erstreckung des Seiten-Aufprallschutzes ist in einem Ausführungsbeispiel so vorgesehen, dass der gesamte Seitenbereich des Motorrollers unterhalb der Fahrerfüße überdeckt und geschützt ist.

Als weitere Funktion des multifunktionalen Trittbrettträgers ist in einer Ausführungsform der Erfindung vorgesehen, dass mindestens eine Aufnahme in einem Zentralbereich des Trittbrettträgers zur Befestigung und Hindurchführung eines Kabelbaumes des Motorrollers vorgesehen ist. Zusätzlich oder alternativ ist eine zweite Aufnahme zum Halten eines Kühlers des Motorrollers in einem Vorderbereich vorgesehen. Auch können beispielsweise Aufnahmen für Kühlwasserschläuche bereitgestellt werden. Im Stand der Technik musste zur Befestigung derartiger Bauteile stets ein Halter am Rahmen oder Träger angeschweißt werden, wohingegen die erfindungsgemäße Ausführung eine Integration der Aufnahmen in den Kunststoffträger leicht im Spritzguss mitrealisiert.

In einer günstigen Ausführung ist ferner vorgesehen, dass der Trittbrettträger Lüftungskanäle aufweist, die sich in Fahrtrichtung vollständig durch den Trittbrettträger erstrecken und somit eine Kühlung von in Fahrtrichtung gesehen hinter dem Trittbrettträger angeordneten Bauteilen, z.B. Elektronikkomponenten ermöglicht. Dabei ist vorteilhaft, dass ein Strömungseinleitungsbereich der Lüftungskanäle im Bereich der Aufnahme zum Halten des Kühlers ausgebildet ist. Der Kühler wird in Fahrtrichtrung gesehen ganz vorne verbaut, um eine bestmögliche Anströmung mit Fahrtwind zu erzielen. In diesem Bereich erfolgt deshalb auch die Einleitung in die Lüftungskanäle. Unabhängig ob der Antrieb durch E-Motor oder Verbrennungsmotor realisiert wird, kommt ein herkömmlicher Wasserkühler zur Kühlung des Motors mit Kühlflüssigkeit zum Einsatz.

Weiterhin ist bei dem erfindungsgemäßen Trittbrettträger vorteilhaft, dass er Befestigungsvorrichtungen zur Befestigung von Verkleidungsteilen aufweist, so dass zusätzlich angeschweißte Halter obsolet werden. Beispielsweise können Clip-Anschlüsse oder Hinterschnitte zum Umgreifen vorgesehen sein.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigt:

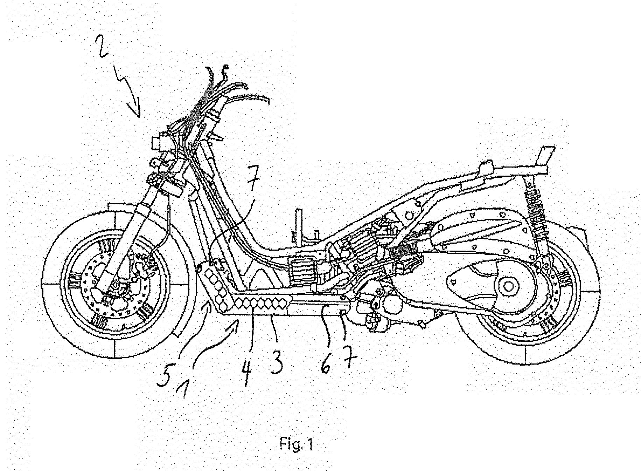

- Fig.1: eine Seitenansicht eines Motorrollers ohne Verkleidung mit schema-tisch dargestelltem Trittbrettträger.

Die Figur 1 zeigt beispielhaft schematisch einen Motorroller 2 mit einem Trittbrettträger 1, wobei keine Trittbrettauflagen dargestellt sind. Der Trittbrettträger 1 ist aus glasfaserverstärktem Kunststoff gebildet und erstreckt sich in Längsrichtung von einem Bereich hinter dem Vorderrad bis zur Schwinge. Im Vorderbereich 5 ist ein zusätzlicher vertikaler Abschnitt vorgesehen, der zur Aufnahme eines Kühlers dient und in einem dem Fahrtwind ausgesetzten Bereich angeordnet ist.

Über eine vorbestimmte vertikale Erstreckung ist im Seitenbereich des Rollers 2 ferner der Seiten-Aufprallschutz 3 vorgesehen, der durch eine Vielzahl von Waben 4 gebildet ist. Die offene Seite der Waben 4 ist jeweils in seitliche Richtung gerichtet, wodurch die Kraftaufnahmekapazität beim Seitenaufprall erhöht ist. Die Waben 4 grenzen unmittelbar aneinander an, wobei sich die Anordnung nicht auf die Gezeigte beschränkt. Vielmehr können auch zusätzliche Waben 4 untereinander angeordnet werden, um eine Gesamtstruktur vergleichbar zu einer Bienenwabe zu erreichen.

Ferner sind an dem Trittbrettträger 1 Luftführungskanäle 6 vorgesehen, die sich in Fahrtrichtung vollständig durch den Trittbrettträger 1 erstrecken und eine Kühlung der in dem Trittbrettträger 1 aufgenommenen Bauteilen sowie der in Fahrtrichtung dahinter liegenden Komponenten ermöglicht. Auch weist der Trittbrettträger 1 angedeutete Befestigungsvorrichtungen 7 zur Befestigung von Verkleidungsteilen auf. Weitere, im Inneren vorgesehene Aufnahmen für Kabel, Kühlschläuche und dergleichen sind nicht explizit dargestellt, jedoch ebenfalls vorgesehen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können in den Trittbrettträger auch Bauteile außenseitig integriert werden, um Designfunktionen zu erfüllen oder technische Bauteile wie Blinker oder dergleichen aufzunehmen.

## Patentansprüche

1. Trittbrettträger für einen Motorroller (2) mit mindestens einer über eine Trittbrettaufnahme weiterführenden Aufnahme- und/oder Schutzfunktion, wobei die Schutzfunktion durch mindestens einen in Fahrtrichtung gesehen seitlich daran ausgebildeten Seiten-Aufprallschutz (3) gewährleistet ist, der dazu ausgebildet ist, eine Seitenfläche des Motorrollers (2) zumindest abschnittsweise zu überdecken, **dadurch gekennzeichnet, dass** der Seiten-Aufprallschutz (3) eine Vielzahl von Waben (4) aufweist.

2. Trittbrettträger nach Anspruch 1, **dadurch gekennzeichnet, dass** er aus Kunststoff gebildet und der Seiten-Aufprallschutz (3) einstückig daran ausgebildet ist.

3. Trittbrettträger nach zumindest einem der vorigen Ansprüche, **dadurch gekennzeichnet, dass** eine offene Seite der Waben (4) jeweils in seitliche Richtung, senkrecht zur Fahrtrichtung, weist.

4. Trittbrettträger nach zumindest einem der vorigen Ansprüche, **dadurch gekennzeichnet, dass** mindestens eine Aufnahme in einem Zentralbereich zur Befestigung und Hindurchführung eines Kabelbaumes des Motorrollers vorgesehen ist.

5. Trittbrettträger nach zumindest einem der vorigen Ansprüche, **dadurch gekennzeichnet, dass** mindestens eine Aufnahme zum Halten eines Kühlers des Motorrollers in einem Vorderbereich (5) vorgesehen ist.

6. Trittbrettträger nach zumindest einem der vorigen Ansprüche, **dadurch gekennzeichnet, dass** Lüftungskanäle (6) vorgesehen sind, die sich in Fahrtrichtung vollständig durch den Trittbrettträger (1) erstrecken.

7. Trittbrettträger nach Anspruch 5 und 6, **dadurch gekennzeichnet, dass** ein Strömungseinleitungsbereich der Lüftungskanäle (6) im Bereich der Aufnahme zum Halten des Kühlers ausgebildet ist.

8. Trittbrettträger nach zumindest einem der vorigen Ansprüche, **dadurch gekennzeichnet, dass** Befestigungsvorrichtungen (7) zur Befestigung von Verkleidungsteilen vorgesehen sind.

9. Motorroller mit einem Trittbrettträger (1) nach zumindest einem der vorigen Ansprüche, wobei im Bereich eines Trittbretts befindliche Komponenten des Motorrollers innenseitig zu dem Seiten-Aufprallschutz (3) angeordnet sind.

## Claims

1. A footboard support for a motor scooter (2), having with at least one receiving and/or protective function which goes further than being a footboard receptacle, wherein the protective function is ensured by at least one lateral impact protection device (3) formed laterally thereon, viewed in the direction of travel, which device is designed to cover a lateral surface of the motor scooter (2) at least in portions, **characterised in that** the lateral impact protection device (3) has a large number of honeycombs (4).

2. A footboard support according to Claim 1, **characterised in that** it is formed from plastics material and the lateral impact protection device (3) is formed in one piece thereon.

3. A footboard support according to at least one of the preceding claims, **characterised in that** an open side of the honeycombs (4) faces in each case in the lateral direction, perpendicular to the direction of travel.

4. A footboard support according to at least one of the preceding claims, **characterised in that** at least one receptacle is provided in a central region for fastening and passing through a cable harness of the motor scooter.

5. A footboard support according to at least one of the preceding claims, **characterised in that** at least one receptacle for holding a radiator of the motor scooter is provided in a front region (5).

6. A footboard support according to at least one of the preceding claims, **characterised in that** ventilation ducts (6) are provided which extend completely through the footboard support (1) in the direction of travel.

7. A footboard support according to Claims 5 and 6, **characterised in that** a flow introduction region of the ventilation ducts (6) is formed in the region of the receptacle for holding the radiator.

8. A footboard support according to at least one of the preceding claims, **characterised in that** fastening devices (7) for fastening fairing parts are provided.

9. A motor scooter with a footboard support (1) according to at least one of the preceding claims, wherein components of the motor scooter which are located in the region of a footboard are arranged on the inside of the lateral impact protection device (3).

## Revendications

1. Support de repose-pieds d'un scooter (2) ayant au moins une fonction de protection et/ou de réception remplie par l'intermédiaire d'un logement de réception du repose-pieds, la fonction de protection étant assurée par au moins une protection antichocs latérale (3) formée latéralement dans la direction de déplacement, qui est réalisée pour recouvrir au moins par segments une surface latérale du scooter (2),
**caractérisé en ce que**
la protection antichocs latérale (3) comporte un ensemble d'éléments en nids d'abeilles (4).

2. Support de repose-pieds conforme à la revendication 1,
**caractérisé en ce qu'**
il est réalisé en matériau synthétique et a protection antichocs latérale (3) est formée en une partie sur celui-ci.

3. Support de repose-pieds conforme à au moins l'une des revendications précédentes,
**caractérisé en ce que**
la face ouverte des éléments en nids d'abeilles (4) est respectivement dirigée latéralement, perpendiculairement à la direction de déplacement.

4. Support de repose-pieds conforme à au moins l'une des revendications précédentes,
**caractérisé en ce qu'**
il est prévu dans la zone centrale au moins un logement de réception permettant la fixation et le passage d'un faisceau de câbles du scooter.

5. Support de repose-pieds conforme à au moins l'une des revendications précédentes,
**caractérisé en ce qu'**
il est prévu dans la zone avant (5) au moins un logement de réception permettant de maintenir un élément de refroidissement du scooter.

6. Support de repose-pieds conforme à au moins l'une des revendications précédentes,
**caractérisé en ce qu'**
il est prévu des canaux d'aération (6) qui s'étendent totalement au travers du support de repose-pieds (1) dans la direction de déplacement.

7. Support de repose-pieds conforme à la revendication 5 ou 6, **caractérisé en ce qu'**
une zone d'entrée du flux alimentant les canaux d'aération (6) est formée dans la zone du logement de réception permettant de maintenir l'élément de refroidissement.

8. Support de repose-pieds conforme à au moins l'une des revendications précédentes,
**caractérisé en ce qu'**
il est prévu des dispositifs de fixation (7) permettant la fixation de pièces d'habillage.

9. Scooter équipé d'un support de repose-pieds (1) conforme à au moins l'une des revendications précédentes, dans lequel des composants du scooter situés dans la zone du repose-pieds sont montés intérieurement par rapport à la protection antichocs latérale (3).
